# EUROPÄISCHE PATENTSCHRIFT

(11) **EP 3 068 522 B1**
(45) Veröffentlichungstag und Bekanntmachung des Hinweises auf die Patenterteilung: **06.10.2021**
(21) Anmeldenummer: 14796504.0
(22) Anmeldetag: 12.11.2014
(51) Int. Cl.: B01D 67/00, B01D 71/42

(54) **VERFAHREN ZUR HERSTELLUNG VON LÖSEMITTELSTABILEN POLYMERMEMBRANEN, POLYMERMEMBRAN SOWIE LÖSUNG ZUR HERSTELLUNG EINER POLYMERMEMBRAN**
METHOD FOR PRODUCING SOLVENT-STABLE POLYMER MEMBRANES, POLYMER MEMBRANE, AND SOLUTION FOR PRODUCING A POLYMER MEMBRANE
PROCÉDÉ DE FABRICATION DE MEMBRANES POLYMÈRES STABLES AUX SOLVANTS, MEMBRANE POLYMÈRE ET SOLUTION POUR FABRIQUER UNE MEMBRANE POLYMÈRE

(30) Priorität: 13.11.2013 DE 102013223126
(43) Veröffentlichungstag der Anmeldung: 21.09.2016
(73) Patentinhaber: Fraunhofer-Gesellschaft zur Förderung der angewandten Forschung e.V., 80686 München (DE)
(72) Erfinder: FRITSCH, Detlev, 21465 Reinbek (DE)
(74) Vertreter: Pfenning, Meinig & Partner mbB
(86) Internationale Anmeldenummer: PCT/EP2014/074308
(87) Internationale Veröffentlichungsnummer: WO 2015/071276

(56) Entgegenhaltungen:
- WO-A1-99/47247
- WO-A2-2010/082194
- DE-A1- 2 129 723
- DE-A1- 2 149 202
- DE-A1- 10 235 088
- US-A- 4 545 910
- None

## Beschreibung

Die vorliegende Erfindung betrifft eine Lösung, enthaltend ein Lösungsmittel sowie darin gelöst ein Poly(meth)acrylnitril bzw. hiervon abgeleitetes Copolymer sowie einen Vernetzer für das Polyacrylnitril, die sich für ein erfindungsgemäßes Verfahren zur Herstellung einer erfindungsgemäßen Polymermembranen eignet. Zudem wird ein Verfahren zur Herstellung einer lösungsmittelstabilen Polymermembran, bei dem die Poly(meth)acrylnitril enthaltende Lösung, die gleichzeitig einen Vernetzer enthält, eingesetzt wird. Die Lösung kann als Film gegossen und der Film vernetzt werden. Ebenso ist es möglich, aus der Lösung eine Hohlfadenmembran zu spinnen und diese anschließend zu vernetzen. Die dabei entstehende Polymermembran auf Basis von Poly(meth)acrylnitril bzw. hiervon abgeleiteten Copolymeren zeichnet sich durch eine durchgängig ausgebildete Vernetzung aus..

Polymermembranen zur Stofftrennung sind in der Regel nur gegenüber wenigen organischen Lösemitteln stabil. Die beste Stabilität besitzen Membranen, die aus Polyvinylidenfluorid (PVDF) oder aus Polyacrylnitril (PAN) hergestellt werden. Jedoch werden diese Membranen durch einen Phaseninversionsprozess aus hochsiedenden Lösemitteln wie z.B. Dimethylformamid (DMF), Dimethylsulfoxid (DMSO), Dimethylacetamid (DMAC) oder N-Methylpyrrolidon (NMP) hergestellt und sind naturgemäß gegenüber diesen Lösemitteln nicht stabil.

Durch den Phaseninversionsprozess werden in der Regel Membranen hergestellt, die eine integral asymmetrische Struktur aufweisen. Dies bedeutet von der Oberseite (Feedseite) der Membran her gesehen eine zunehmende Porosität zur Unterseite (Permeatseite). Die eigentliche Trennschicht der Membran an der Oberseite kann durch Wahl der Lösemittel im Prinzip von porenfrei bis zu Poren im Mikrometerbereich eingestellt werden. Porenfreie Membranen können zur Gastrennung oder zur Nanofiltration eingesetzt werden, mit zunehmender Porengröße werden Membranen für die Ultrafiltration oder Mikrofiltration erhalten. Diese Membranen können direkt zur Stofftrennung eingesetzt werden.

Beim Vorliegen von Poren kleiner 50 nm, besser aber kleiner 25 nm eignen sich die Membranen darüber hinaus auch als Unterlage (Trägermembran) von Kompositmembranen. Hier sind die Erfordernisse für Gas- bzw. Flüssigtrennung unterschiedlich. Für den Einsatz in der Gastrennung ist ein Fluss von mindestens 10-fach größer des Endflusses der Kompositmembranen erforderlich. In der Regel werden hier Gasflüsse größer 100 m³/m²hbar benötigt. Für Flüssiganwendungen wie Ultra- oder Nanofiltration sind in der Regel Wasserflüsse von > 50 L/m²hbar ausreichend. Prinzipiell bedeuten höhere Flüsse bei kleinen und mittleren Porengrößen eine höhere Porosität und sind anzustreben.

Kompositmembranen bestehen aus einer porösen Trägermembran, auf die die eigentliche Trennschicht durch bekannte Verfahren wie Sprühen, Drucken, Walzenauftrag, Düsenbeschichtung oder Spritz- oder Tauchverfahren aufgebracht wird. Diese Trennschicht besteht in der Regel aus einem zweiten Polymer, das die Selektivität liefert. Um für die technische Anwendung ausreichend Durchsatz zu erzielen muss diese -Trennschicht möglichst dünn und fehlstellenfrei aufgebracht werden und gut haften. Die typische Dicke liegt je nach Anwendung und Material zwischen 50 und 1000 nm. Diese Trennschicht kann darüber hinaus durch geeignete Verfahren, wie z.B. Vernetzungstechniken lösemittelstabil gemacht werden. Beim Aufbringen einer lösmittelstabilen Trennschicht auf einer lösemittelstabilen Trägermembran sind per se die erhaltenen Membranen lösemittelstabil.

Lösungsmittel- und säurestabile Polymermembranen sind in der Patentliteratur beschrieben. So wird in EP 0574957 (1990) eine PAN-Membran mit Natriumethanolat basisch behandelt und dadurch vernetzt. Die Membran verändert dabei die Farbe, wird dunkelbraun und spröde. Der Cut-off liegt typischerweise bei 5.000 g/mol. Diese Membran ist als Träger für Kompositmembranen nicht einsetzbar.

In der WO 2010/082194 (2010) werden kommerzielle Membranen aus verschiedenen Polymeren wie Polysulfon (PS), Polyethersulfon (PES), PAN, PVDF mit Polyethylenimin (PEI) vernetzt. Dazu werden PES-Membranen chlorsulfoniert und können dann mit PEI vernetzt werden. Bei PS-Membranen müssen in einer Vorbehandlung die mit Glycerin vor dem Kollabieren geschützten Poren gereinigt werden, um dann mit hochmolekularem PEI vorbehandelt und einem mindestens bifunktionellen Vernetzer vernetzt zu werden. PAN- und PVDF-Membranen werden mit einer wässrigen Lösung von nieder- und hochmolekularem PEI getränkt und 15-20 h bei 90°C hitzebehandelt und gewaschen. Die erhaltenen Membranen sind säure- und lösemittelstabil und zeigen hohe Permeatflüsse. Weiterhin zeigen einige der Membranen eine ca. 99 % Rückhaltung von Cu²⁺-Ionen aus Wasser und eine Glucose Rückhaltung von 98-99 % aus den hochsiedenden Lösungsmitteln NMP und DMF. Es wird nicht berichtet, ob die Membranporen vor dem Kollabieren durch Glycerin o.ä. geschützt werden müssen und ob Kompositmembranen aus diesen Trägermembranen hergestellt werden können. Die auf kommerziell verfügbaren Membranen basierende Herstellung ist langwierig und benötigt 90°C über einen Zeitraum von bis zu 20 h. Die WO 2010/082194 beschreibt eine vernetzte, semipermeable Membran aus Polymeren mit reaktiven Gruppen, die mit geeigneten Reaktanden, einem weiteren Polymer oder Oligomer, an der Oberfläche vernetzt werden. Als reaktive Gruppen werden -CN und CI (allgemein Halogen) besonders erwähnt. Als weitere Polymere für die Vernetzung werden Polyethylenimine (PEI) und Polyvinylalkohol aufgeführt. Vor der Vernetzung an der Oberfläche werden in einem ersten Verfahrensschritt poröse Membranen z.B. aus PAN, PVDF, etc. hergestellt, die in einem nächsten Schritt mit dem zur Vernetzung geeigneten Polymer an der Oberfläche vernetzt und damit gegenüber Lösemitteln stabilisiert werden. Die Membranen können auch in N-Methylpyrrolidon (NMP), einem Lösemittel für PAN, betrieben werden. Da die Vernetzung nur an der Oberfläche der zuvor hergestellten Membran stattfindet sind im inneren, nicht zugänglichen Teil der Membran unvernetzte Bereiche, die stark quellen, bzw. auch diffusiv daraus Polymer gelöst werden kann und die Membran an Stabilität verliert oder zerstört wird.

In DE 19811997 (1998) wird ein PAN-Copolymer aus Acrylnitril und Glycidylmethacrylat hergestellt. Die Glycidyl-Gruppen werden durch Ammoniak bei 120°C im Autoklaven vernetzt und eine lösemittelstabile Membran erhalten. Diese Membran ist vor der Vernetzung sehr gut zur Anbindung von Enzymen in der Membran geeignet, allerdings nicht druckstabil für Drücke von bis zu 60 bar und nicht für Kompositmembranen geeignet.

In DE 19811998 (1998) werden über funktionelle Gruppen vernetzbare PAN-Copolymere synthetisiert, die nach der Membranherstellung in einem zweiten Schritt mit Di- bis Poly-funktionellen Reagenzien vernetzt werden. DE 19811997 und DE 19811998 besitzen den Nachteil, dass spezielle Comonomere hergestellt werden müssen, und zur Vernetzung Basen oder Säuren zugesetzt werden müssen, deren Überschüsse durch Waschen in einem weiteren Schritt entfernt werden.

In WO 2007/1125367 werden aus Polyimiden nanoporöse Membranen hergestellt, die einen cut-off Wert unter 500 g/mol zeigen und prinzipiell als Trägermaterial für Kompositmembranen geeignet sind. Allerdings müssen die Poren dieser Membranen vor dem Kollabieren geschützt werden. Dazu werden die Membranen mit hygroskopischen Stoffen wie Glycerin oder niedermolekularen Polyethylenglykolen imprägniert. Dies verhindert in der Regel eine Verwendung als Trägermaterial für Kompositmembranen, da diese Behandlung eine Beschichtung verhindert. Darüber hinaus müssen die Membranen, um gegenüber Lösemitteln stabil zu sein, in einem zweiten Schritt mit geeigneten Di- oder Polyaminen vernetzt werden. Weiterhin besitzen diese Membranen in basischen pH-Werten > pH=9 keine Stabilität, da die Polyimidstruktur angegriffen wird und die Membranen zerstört werden.

Polyacrylnitril ist ein für Polymermembranen gut einsetzbares Polymer, das eine gute Lösemittelstabilität besitzt und sich trotzdem aus einigen hochsiedenden Lösemitteln durch den Phaseninversionsprozess zu Fasern oder Membranen verarbeiten lässt. Häufig verwendete Lösemittel für PAN sind z.B. Dimethylacetamid (DMAC), Dimethylformamid (DMF), Ethylencarbonat, γ-Butyrolacton (GBL), N-Methylpyrrolidon (NMP). Für technische Faserspinnprozesse werden auch wässrige Lösungen von Salzen wie Natriumthiocyanat (NaSCN) und Zinkchlorid oder Salpetersäure eingesetzt. Dimethylsulfoxid (DMSO) findet nur in geringerem Umfang Anwendung beim Faserspinnen [siehe A. Nogaj, C. Süling, M. Schweizer, Fibers, 8. Polyacrylonitrile Fibers, in: Ullmann's Encyclopedia of Industrial Chemistry, Wiley-VCH Verlag GmbH & Co. KGaA, 2000].

Aus Lösungsmittel durch Phaseninversionsprozess hergestellte, poröse Membranen zeichnen sich durch eine große äußere und innere Oberfläche ab. Diese Oberfläche wurde für Vernetzungsreaktionen genutzt, um die Membran gegen Lösemittel zu stabilisieren [WO 2010/082194]. Das im Falle von PAN dazu verwendete Polyethylenimin wird aus wässriger oder wässrig/alkoholischer Lösung appliziert, dringt in die Poren ein und führt zur Vernetzung an der äußeren und inneren Membranoberfläche. Dazu wird die Membran allerdings für 17 h bei 90°C in einem geschlossenen Reaktor behandelt und danach gewaschen und getrocknet. Diese Membranen sind stabil gegenüber Hochsiedern wie NMP. Werden die Membranen nur bei RT für 17 h nach dieser Methode behandelt sind die Membranen nicht vernetzt und werden durch Hochsieder wie NMP, DMF, DMAC, etc. zerstört

Die in der Literatur verwendeten Methoden zur Herstellung von PAN-Membranen basieren meist auf den Lösemitteln DMF und NMP. Seltener wird DMAC oder DMSO verwendet. Die herzustellende Membran sollte eine möglichst weitgehende Schaumstruktur aufweisen, um eine hohe Druckstabilität zu gewährleisten. Drücke bis zu 80 bar sind in der Umkehrosmose üblich und können auch in der Nanofiltration mit organischen Lösemitteln für einen ökonomischen Prozess erforderlich sein.

In der DE 21 29 723 A1 wird beispielsweise eine Lösung enthaltend PAN, PEI und DMF als Lösungsmittel offenbart, wobei PAN und PEI in einem Verhältnis von 97 zu 3 stehen. Zudem wurde ein Copolymer aus AN und einem Salz von (Meth)allylsulfonsäure offenbart.

Auch die US 4 545 910 A beschreibt ein Copolymer aus AN und Sulfonsäuregruppen-enthaltenden Monomere sowie den Salzen dieser Sulfonsäuregruppen-enthaltenden Monomere
, wobei
eine semipermeable Membran, die entweder (i) ein Copolymer aus Acrylnitril und mindestens einem ionischen oder ionisierbaren Monomer oder (ii) ein Copolymer aus Acrylnitril, mindestens einem ionischen oder ionisierbaren Monomer und mindestens einem nichtionischen und nichtionischen Monomer enthält -ionisierbares Monomer oder (iii) eine Mischung aus mindestens zwei Copolymeren wie unter (i) und / oder (ii) definiert oder (iv) eine Mischung aus mindestens einem Copolymer wie unter (i) und / oder (ii) definiert ) und mindestens ein Copolymer aus Acrylnitril und mindestens einem nichtionischen und nichtionisierbaren Monomer, wobei die ionischen oder ionisierbaren Monomereinheiten 1 bis 80 Mol-% der Monomereinheiten in einem der genannten Copolymere ausmachen und 1 bis 10 Mol-% ausmachen Es werden 50 Mol-% der Monomereinheiten in der Membran mit einem Salzabweisungsgrad von weniger als 1% und einer Wasserdurchlässigkeit von mehr als 100 Litern / Tag · m 2 bei einem relativen Druck von 2 bar mit ausgezeichneten Eigenschaften bereitgestellt zur Verwendung in der Ultrafiltration und Dialyse. Es wird auch ein Verfahren zur Herstellung einer semipermeablen Membran bereitgestellt, das das Behandeln eines Films, der mindestens ein Copolymer von Acrylnitril und einem ionischen oder ionisierbaren Monomer enthält, mit Wasser oder einem wässrigen Nichtlösungsmittelgemisch bei einer Temperatur zwischen 60 ° C und 250 ° C umfasst,
beschrieben wird.

Die DE10235088A1 betrifft ein Verfahren zur Herstellung einer, vorzugsweise porösen, Membran, insbesondere Flachmembran oder Hohlmembran, wobei aus einem Ausgangsfluid eine Membran gebildet wird, sowie eine hiernach hergestellte Membran. Die Erfindung ist dadurch gekennzeichnet, daß mittels wenigstens eines Reagenzmittels im Ausgangsfluid eine Vernetzung der auszubildenden Membran hergestellt wird. Die Membran umfasst hierbei ein Copolymer auf Basis von (Meth)acrylnitril oder Mischungen hiervon.

Zur Membranherstellung wird nach den bekannten Methoden eine Mischung aus Lösemittel und Quellmittel oder Nichtlösemittel verwendet. DMSO wurde hier als Basislösemittel ausgewählt, da es nach den REACH Vorgaben als die beste Wahl im Vergleich zu DMF, NMP und DMAC oder Sulfolan anzusehen ist.

In DE 69831305 werden aus PAN Hohlfäden zur Filtration hergestellt, die eine völlige Schaumstruktur aufweisen. Dazu wird dem Lösemittel DMSO das Lösemittel Propylencarbonat zugefügt und mit Polyethylenglykol niederer Molmasse als Nichtlösemittel gemischt, um dicht an die Fällgrenze zu gehen. Die Polymerkonzentration lag >18% und es wurde ein hochmolekulares PAN eingesetzt. Daraus ergibt sich eine sehr hohe Viskosität, mit der Hohlfäden hergestellt werden können. Für Flachmembranen ist eine gießfähige Lösung in der Regel erforderlich. Propylencarbonat ist ein wichtiger Bestandteil der Gießlösung in DE 69831305. Ohne diesen Stoff wird es als schwierig bezeichnet eine Membran mit den gewünschten Eigenschaften zu erhalten. Diese Zusammensetzung der Gießlösung ist für Flachmembranen wegen der hohen Viskosität nicht verwendbar. Darüber hinaus dürfen für Gießlösungen, die den Vernetzer PEI enthalten, keine Lösemittel oder Lösemittelzusätze verwendet werden, die mit PEI reagieren und den Vernetzer dadurch unwirksam machen. Dazu zählen Propylencarbonat, Ethylencarbonat und gamma-Butyrolacton. Es müssen also andere Quellmittel oder Nichtlösemittel gefunden werden. Ohne Zusatz von Quellmitteln oder Nichtlösemitteln hergestellte Membranen aus den reinen Lösemitteln DMF, DMAC oder DMSO mit dem vernetzenden Zusatz PEI ergeben zwar Membranen. Diese weisen aber sehr große Kavernen auf, die bis dicht unterhalb der Trennschicht auftreten. Somit ist die Gefahr von Fehlstellen stark erhöht und die gesamte Membran ist für Anwendung unter hohem Druck nicht geeignet.

Es müssen also Zusatzstoffe gefunden werden, die als Quellmittel oder Nichtlösemittel wirken, die Polymerlösung in die Nähe der Fällgrenze bringen und nicht mit PEI reagieren. Darüber hinaus sollen diese Stoffe eine hohe bis vollständige Wassermischbarkeit zeigen, nicht toxisch sein und biologisch leicht abbaubar.

Ausgehend hiervon ist es somit Aufgabe der vorliegenden Erfindung, einer Lösung zur Herstellung eine Polymermembran auf Basis von Acrylnitrilen zu beschreiben, mit der auf einfache Art und Weise lösungsmittelstabile Membranen, die ein möglichst homogenes Eigenschaftsprofil aufweisen, herstellbar sind.

Die hier zu entwickelnden Membranen soll mechanisch stabil, flexibel, hochporös, lösemittelstabil und mit weiteren Polymeren zu Kompositmembranen beschichtbar sein, somit die oben beschriebenen Nachteile nicht aufweisen. Weiterhin soll die erfindungsgemäße Membran in einem Verfahrensschritt aus einer Gießlösung hergestellt werden und durch dem Fachmann bekannte weitere übliche Verfahrensschritte wie Waschen und Trocknen der Membran konfektioniert werden. Es sollen keine Imprägniermittel erforderlich sein, um die Poren der Membran vor dem Kollabieren zu schützen. Die Membran soll sowohl im nassen Zustand als auch trocken durch übliche Verfahren fehlstellenfrei beschichtbar sein. Außerdem soll diese Membran allgemein zur Filtration aus Wasser und organischen Lösemitteln verwendbar sein.

Die Aufgabe der Erfindung besteht somit darin eine gegenüber hoch- und tiefsiedenden Lösemitteln beständige, sich in ihren Trenneigenschaften nicht verändernde, poröse Membran herzustellen. Dabei sollen die einzelnen Verfahrensschritte mit geringem Aufwand und auf herkömmlichen Membranherstellungsmaschinen durchführbar sein. Die erfindungsgemäße Membran soll sowohl zur Filtration allgemein, als auch als Substrat für Kompositmembranen geeignet sein. Bei der Wahl der Lösemittel für den Phaseninversionsprozess sollen nur Lösemittel, die nach der Europäischen Chemikalienverordnung REACH als unproblematisch eingestuft werden zur Anwendung kommen.

Diese Aufgabe wird mit einer Lösung zur Herstellung einer Polymermembran mit den Merkmalen des Patentanspruchs 1 gelöst, gemäß dem Verfahren zur Herstellung einer lösungsmittelstabilen Polymermembran mit den Merkmalen des Patentanspruchs 8 sowie bezüglich einer Polymermembran mit den Merkmalen des Anspruchs 12. Die jeweilig abhängigen Patentansprüche stellen dabei vorteilhafte Weiterbildungen dar.

Erfindungsgemäß wird somit eine Lösung zur Herstellung einer Polymermembran, enthaltend oder bestehend aus
a) einem Copolymer auf Basis von (Meth)acrylnitril erhältlich durch Copolymerisation von (Meth)acrylnitril mit mindestens einem Copolymeren, ausgewählt aus der Gruppe bestehend aus (Meth)allylsulfonsäure oder deren Salzen oder Mischungen hiervon,
b) mindestens einen Vernetzer für Poly(meth)acrylnitril oder ein Copolymer auf Basis von (Meth)acrylnitril, wobei der Vernetzer
   - ein Aminogruppen haltiges Polymer ist, ausgewählt aus der Gruppe bestehend aus Polyethylenimin (PEI), Polyvinylamin, Polyallylamin und/oder Mischungen hieraus und/oder
   - in situ aus blockiertem Polyethylenimin, blockiertem Polyvinylamin, blockiertem Polyallylamin und/oder Mischungen oder Kombinationen hieraus freigesetzt wird,
   sowie
c) mindestens ein Lösungsmittel für Poly(meth)acrylnitril oder ein Copolymer auf Basis von (Meth)acrylnitril, in dem die zuvor genannten Bestandteile gelöst vorliegen.

Geeignete Lösungsmittel sind dabei ausgewählt aus der Gruppe bestehend aus Dimethylsulfoxid (DMSO), Dimethylformamid (DMF), N-Methylpyrrolidon (NMP), Dimethylacetamid (DMAC), Tetrahydrothiophen-1,1-dioxid (Sulfolan), wässrige Lösungen von Natriumthiocyanat und/oder Zinkchlorid, sowie Mischungen hiervon.

Erfindungsgemäß ist Dimethylsulfoxid (DMSO) als Lösungsmittel besonders bevorzugt.

Der Vernetzer ist dabei vorzugsweise ein aminogruppenhaltiges Polymer, das bevorzugt ausgewählt ist aus der Gruppe bestehend aus Polyethylenimin (PEI), Polyvinylamin, Polyallylamin und/oder Mischungen oder Kombinationen hieraus, wobei das Polyethylenimin (PEI), Polyvinylamin oder Polyallylamin bevorzugt ein zahlengemitteltes Molekulargewicht Mw von 25.000 bis 750.000 g/mol aufweist.

Ebenso ist es möglich, dass der Vernetzer in Form einer Vorläuferverbindung der Lösung zugesetzt ist, wobei bei der Vernetzer bei der erfindungsgemäßen Verfahrensführung *in situ* aus der Vorläuferverbindung freigesetzt wird. Die Vorläuferverbindungen sind dabei beispielsweise blockiertes Polyethylenimin, blockiertes Polyvinylamin, blockiertes Polyallylamin und/oder Mischungen oder Kombinationen hieraus, wobei das blockierte Polyethylenimin (PEI), blockierte Polyvinylamin oder blockierte Polyallylamin bevorzugt ein zahlengemitteltes Molekulargewicht M_{w} von 25.000 bis 750.000 g/mol aufweist. Im erfindungsgemäßen Sinne bedeutet dabei "blockiert" dass die jeweiligen vernetzungsaktiven Funktionalitäten der zuvor genannten Amine inaktiv sind, d.h. chemisch maskiert sind. Dies kann beispielsweise dadurch erreicht werden, dass die entsprechende Amine mit Ketonen zu den entsprechenden Ketiminen umgesetzt werden, wobei bevorzugt aliphatische Ketone, insbesondere Methylisobutylketon verwendet werden. Besonders bevorzuge Vorläuferverbindungen sind somit das Ketimin des Polyethylenimins, das Ketimin des Polyvinylamins und das Ketimin des Polyallylamins, wobei die Ketogruppe bevorzugt von aliphatischen Ketonen, insbesondere von Methyl-*iso*-butylketon abgeleitet ist. Beim erfindungsgemäßen Herstellungsverfahren konnte eine Freisetzung des Vernetzers unter Temperatur- und/oder Feuchtigkeitseinfluss beobachtet werden.

Eine weitere bevorzugte Ausführungsform der erfindungsgemäßen Lösung sieht vor, dass sie ein Nichtlösungsmittel enthält, in dem sich Poly(meth)acrylnitril oder das hiervon abgeleitete Copolymere nicht löst. Das Nichtlösungsmittel muss jedoch mit dem Lösungsmittel und dem Fällmittel (Wasser) mischbar sein. Der Einsatz des Nichtlösungsmittels führt zu einer Erhöhung der Lösungsmittelviskosität der verwendeten Lösung. Dies wirkt sich insbesondere vorteilhaft auf die hergestellte Membran aus, da bei Abscheiden aus einer derartigen Lösung kleiner Porengrößen erzielbar sind. Die dadurch hergestellte Membran weist dadurch eine schaumartige Struktur auf.

Bevorzugt ist das Nichtlösungsmittel ausgewählt aus der Gruppe bestehend aus 1,3-Dioxolan, Polyalkylenglycol, insbesondere Polyethylenglycol, Tetraalkylenglycol, insbesondere Tetraethylenglycol, Alkoholen, insbesondere Isopropanol, Ethanol, Alkyllactaten, insbesondere Ethyllactat sowie Mischungen hiervon.

Weiter vorteilhaft beträgt der Gesamtgehalt von Poly(meth)acrylnitril, des Copolymers auf Basis von (Meth)acrylnitril oder Mischungen hiervon, bezogen auf das Lösungsmittel sowie ggf. der Summe aus Lösungsmittel und Nichtlösungsmittel von 1 bis 30 Gew.-%, bevorzugt 5 bis 20 Gew.-%, besonders bevorzugt 7,5 bis 15 Gew.-%.

Vorzugsweise beträgt der Gesamtgehalt des Vernetzers, bezogen auf Poly(meth)acrylnitril, das Copolymer auf Basis von (Meth)acrylnitril oder Mischungen hiervon von 1 bis 50 Gew.-%, bevorzugt 3 bis 20 Gew.-%, besonders bevorzugt 8 bis 14 Gew.-%.

De Gehalt des Nichtlösungsmittels" bezogen auf den Gehalt des Lösungsmittels oder des Gemisches aus mindestens zwei Lösungsmitteln beträgt dabei vorzugsweise 50 bis 60 Gew.-%, bevorzugt 15 bis 45 Gew.-%.

Gemäß einer besonders bevorzugten Ausführungsform ist das eingesetzte Polymer Polyacrylnitril. Bevorzugte Copolymere sind durch Copolymerisation von (Meth)acrylnitril mit mindestens einem Copolymeren, ausgewählt aus der Gruppe bestehend aus (Meth)allylsulfonsäure oder deren Salzen erhältlich.

Die Lösung weist dabei eine bevorzugte Viskosität 1,5 bis 20 Pa·s, bevorzugt 4bis 12 Pa·s auf.

Zudem betrifft die vorliegende Erfindung ein Verfahren zur Herstellung einer lösungsmittelstabilen Polymermembran, bei dem eine Lösung, enthaltend oder bestehend aus
a) Poly(meth)acrylnitril, ein Copolymer auf Basis von (Meth)acrylnitril, erhältlich durch Copolymerisation von (Meth)acrylnitril mit mindestens einem Copolymeren, ausgewählt aus der Gruppe bestehend aus (Meth)allylsulfonsäure oder deren Salzen oder Mischungen hiervon,
b) mindestens einen Vernetzer für Poly(meth)acrylnitril oder ein Copolymer auf Basis von (Meth)acrylnitril, wobei der Vernetzer
   - ein Aminogruppen haltiges Polymer ist, ausgewählt aus der Gruppe bestehend aus Polyethylenimin (PEI), Polyvinylamin, Polyallylamin und/oder Mischungen hieraus und/oder
   - in situ aus blockiertem Polyethylenimin, blockiertem Polyvinylamin, blockiertem Polyallylamin und/oder Mischungen oder Kombinationen hieraus freigesetzt wird,
   sowie
c) mindestens ein Lösungsmittel für Poly(meth)acrylnitril oder ein Copolymer auf Basis von (Meth)acrylnitril, in dem die zuvor genannten Bestandteile gelöst vorliegen
als Film gegossen oder zu einem Hohlfaden versponnen, das Poly(meth)acrylnitril, Copolymer auf Basis von (Meth)acrylnitril oder die Mischung hiervon durch einen Phaseninversionsprozess ausgefällt und das Poly(meth)acrylnitril, Copolymer auf Basis von (Meth)acrylnitril oder die Mischung hiervon durch Temperaturbehandlung bei gegenüber Raumtemperatur erhöhten Temperaturen vernetzt wird, wobei der Film auf ein Vlies aus einem polymeren Material gegossen wird.

Überraschenderweise wurde gefunden, dass der Vernetzer auch vor der Membranherstellung zur Gieß- bzw. Spinnlösung zugesetzt werden kann und die Lösung gegebenenfalls nach der üblichen Behandlung wie Filtration und Entgasung zur Membranherstellung verwendbar ist. Der Vernetzer, wie z.B. der sehr gut wasserlösliche Vernetzer PEI wird auch bei dem Fällprozess z.B. in Wasser nicht oder nur zum Teil ausgewaschen und kann durch nachfolgende Temperaturbehandlung über die reaktiven Cyanogruppen die PAN-Membran im Innern vernetzen. Dadurch werden in einem kontinuierlichen Herstellungsverfahren lösemittelstabile Membranen zugänglich

Der Begriff Poly(meth)acrylnitril steht dabei für Polyacrylnitrile, die ggf. an der Vinylgruppe durch eine Methylgruppe substituiert sein können und umfasst somit sowohl Polyacrylnitril als auch Polymethacrylnitril. Copolymere auf Basis von (Meth)acrylnitril sind dabei im Wesentlichen von dem monomeren (Meth)acrylnitril abgeleitet, d.h. bevorzugt sind diese Polymere zu mindestens 80 mol-% von (Meth)acrylnitril abgeleitet. Besonders bevorzugt ist dabei Polyacrylnitril.

Das Ausfällen des Poly(meth)acrylnitrils durch einen Phaseninversionsprozess ist dabei bereits literaturbekannt und wird auch gemäß der vorliegenden Erfindung, wie im Stand der Technik beschrieben, ausgeführt. Geeignete Fällbäder stellen dabei insbesondere Wasser dar bzw. geeignete wässrige Lösungen. Für den Fall, dass wässrige Lösungen eingesetzt werden, ist es bevorzugt, wenn Lösungsmittel verwendet werden, die nicht wassergiftig sind. Der Vorteil dabei ist, dass die Lösung des Fällbades bei Austausch direkt ohne weitere Aufbereitung zur biologischen Klärung in die Kanalisation eingeleitet werden kann. Der Prozess der Phaseninversion ist insbesondere aus der DE 198 11 998 C1 bekannt, bezüglich der Details der Durchführung des Phaseninversionsprozesses wird auf diese Druckschrift verwiesen. Vorzugweise weist das Fällbad Temperaturen auf, die bei Raumtemperatur ± 20°C bevorzugt Raumtemperatur ± 10°C liegen.

Für den Fall, dass eine Flachmembran hergestellt wird, wird die Lösung als Film gegossen. Für den Fall, dass eine Hohlfadenmembran erzeugt wird, wird die Lösung durch eine Ringdüse versponnen. Prinzipiell ist hierbei denkbar, dass ein Luftspinnen erfolgt, d.h., dass vor Eintrag in das Fällbad der erzeugte Hohlfaden, der durch die Ringdüse erzeugt wird, über einen Luftspalt in Richtung des Fällbades transportiert wird, ebenso ist es möglich, dass ein direktes Einspinnen des Hohlfadens in die Spinnlösung selbst erfolgt. Im Falle der Erzeugung eines Hohlfadens durch Verspinnung der erfindungsgemäßen Lösung ist es ebenso möglich, dass der Hohlfaden bereits in ein heißes Fällbad eingebracht wird, hierbei kann das Fällbad beispielsweise Temperaturen von 80 bis 99°C, bevorzugt 90 bis 97°C, insbesondere ca. 95°C aufweisen. Hierbei findet bereits bei Eintritt des Hohlfadens in das Fällbad ein gleichzeitiges Ausfällen und Vernetzen der Polymermembran statt.

Die Vernetzung wird durch Temperaturbehandlung des erhaltenen Films oder Hohlfadens erreicht, erfindungsgemäß wird dabei erreicht, dass ein komplett homogen ausgebildeter Film bzw. Hohlfäden erzielt wird.

Bevorzugt erfolgt das Gießen bzw. das Spinnen und das Fällen des Filmes bei Temperaturen, bei denen die Vernetzung noch nicht aktiviert wird bzw. stattfindet.

Dabei lassen sich Nachteile gemäß aus dem Stand der Technik bekannten Membranen vermeiden, bei denen lediglich eine Vernetzung an der Oberfläche entsprechender Membranen durchgeführt wird (siehe beispielsweise WO 2010/082194 A2). Somit wird erfindungsgemäß eine äußerst hohe Quervernetzung des eingesetzten Poly(meth)acrylnitrils bzw. des Copolymeren hiervon erzielt, womit die Lösungsmittelbeständigkeit der erfindungsgemäßen Polymermembranen der aus dem Stand der Technik bekannten Membranen übersteigt.

Für den Fall, dass eine Flachmembran erzeugt werden soll, ist es bevorzugt wenn der Film auf ein Substrat gegossen wird. Insbesondere auf ein Vlies aus einem polymeren Material, bevorzugt Polyester. Diese Ausführungsform ist insbesondere vorteilhaft, da einerseits ein kontinuierlicher Transport der auf dem Fließmaterial aufgebrachten Polymermembran durch das Fällbad bzw. durch ein weiteres Bad möglich ist, andererseits in einem Schritt eine fertige Verbundmembran hergestellt werden kann.

Weiterhin kann der nach dem Phaseninversionsprozess erhaltene Film bzw. Hohlfaden mit Wasser gewaschen werden.

Die zur Vernetzung eingesetzte Temperaturbehandlung wird dabei vorteilhafterweise bei Temperaturen von 50 bis 150 °C, bevorzugt von 70 bis 120 °C, besonders bevorzugt von 85 bis 99 °C durchgeführt.

Besonders bevorzugt und erfindungsgemäß ist es dabei, unmittelbar im Anschluss an den Fällschritt und/oder an den ggf. erfolgenden Waschschritt sowie die Temperaturbehandlung durchgeführt wird. Gemäß einer besonders bevorzugten Ausführungsform der vorliegenden Erfindung wird dazu ein Wasserbad verwendet, das eine Temperatur von mehr als 50°C, vorzugsweise 50 bis 99°C, weiter bevorzugt 70 bis 99°C, insbesondere 85 bis 95°C beträgt. Beispielsweise ist möglich, dass die kontinuierlich erzeugten Filme bzw. Hohlfasern aus dem Fällbad ausgetragen und in ein temperiertes Wasserbad eingebracht werden. Dies kann beispielsweise mittels hierfür aus dem Stand der Technik bekannter und geeigneter Maschinen für die Membranherstellung erfolgen. Alternativ ist es ebenso möglich, das Verfahren kontinuierlich durchzuführen. Die Schritte Fällen, Vernetzen/Waschen, Trocknen können in einer Maschine erfolgen und es wird eine erfindungsgemäße trockene Membran erhalten. Es kann auch beispielsweise gegeben sein, dass die erzeugten Filme bzw. Hohlfäden zunächst dem Fällbad entnommen und auf eine entsprechende bevorratende Rolle aufgerollt und die Rolle selbst z.B. in einem Wasserbad temperiert wird. Besonders vorteilhaft bei der Durchführung des Temperierschrittes in dem Wasserbad ist zudem, dass ggf. noch vorhandenes Lösungsmittel in der erzeugten Polymermembran dabei vollständig ausgewaschen wird.

Die Temperaturbehandlung wird dabei vorteilhafterweise über einen Zeitraum von 5 min bis 24 Stunden, bevorzug 15 min bis 12 Stunden, besonders bevorzugt von 20 min bis 60 min durchgeführt.

Gegebenenfalls kann nach Vernetzung und/oder dem Waschschritt ein Trocknen der Membran durchgeführt werden, vorzugsweise in einem Luftstrom mit einer Temperatur zwischen 60 und 120°C. Vorzugsweise wird der Vernetzungsschritt bereits so geführt, dass eine vollständig vernetzte Membran vorliegt, sodass während des Trocknungsschrittes keine weitere Vernetzung und dadurch bedingt eine dimensionelle Veränderung der erzeugten Membran stattfindet. Lediglich noch anhaftendes Wasser bzw. ggf. vorhandene Lösungsmittel werden somit beim Trocknungsschritt entfernt.

Prinzipiell ist es aber ebenso denkbar, dass der Vernetzungsschritt während des Trocknungsschrittes durchgeführt, bevorzugt wie voranstehend beschrieben.

Zudem betrifft die Erfindung eine Polymermembran aus Poly(meth)acrylnitril bzw. hiervon abgeleiteten Copolymeren, die sich durch eine durchgängig ausgebildete Vernetzung des Poly(meth)acrylnitrils bzw. des Copolymeren hiervon auszeichnen. Die Vernetzung ist somit nicht nur an der Oberfläche der Membran, sondern gleichmäßig durch die gesamte Membran ausgebildet.

Die Membran kann dabei prinzipiell als Film ausgebildet sein, ebenso ist es denkbar, dass die Membran die Gestalt eines Hohlfadens aufweist.

Bevorzugt beträgt die Dicke der Membran ohne ggf. vorhandenes Substrat von 20 bis 200 µm, bevorzugt von 40 bis 90 µm.

Die Dicke der Membran bezieht sich dabei entweder auf die Schichtdicke des Films oder auf die Dicke der Wandung des Hohlfadens.

Für den Fall, dass ein weiteres Substrat vorhanden ist, ist dies bevorzugt ein Vlies, insbesondere ein Polyestervlies.

Das Vorhandensein eines Substrates, beispielsweise eines Vlieses, insbesondere eines Polyestervlieses ist dabei insbesondere bei Filmmembranen bevorzugt.

Vorzugsweise weist die Membran Poren auf, wobei die Porengröße am Bubble-Point bei 20 bis 100 nm, besonders bevorzugt bei 30 bis 50 nm liegt. Der Bubble Point der Membranen liegt im Bereich von 6 bis 20 bar, vorzugsweise 15 bis 20 bar entsprechend einer Porengröße am Bubble Point von 43 bis 32 nm. Zur Bestimmung des Bubble Points wurde ein Porometer (Porolux®500) verwendet. Der Blasenpunkt (Bubble Point) wird beim ersten messbaren Fluss angegeben und entspricht der größten Pore, der Pore am Bubble Point. Die mittlere Porengröße wird als die Porengröße bei 50 % des Gesamtflusses bestimmt. Der Bubble Point stellt in Verbindung mit der durchschnittlichen Porengröße ein Maß für die Qualität der erhaltenen Membran dar. Zum Beispiel repräsentiert eine durchschnittliche Porengröße von 30 nm am Bubble Point bei einer durchschnittlichen Porengröße von 20 nm eine sehr gute Membran Eine Porengröße am Bubble Point von 150 nm bei durchschnittlicher Porengröße von 20 nm repräsentiert eine eher schlechte Membran. Alternativ hierzu entspricht die Porengröße immer einem Druck, mit der die Membran zur Messung beaufschlagt wird. Insofern ist es ebenso möglich, die Porengröße direkt über den Bubble Point in Abhängigkeit eines Drucks zu definieren. Eine bevorzugte Porengröße lässt sich somit über den Bubble Point Test definieren.

Hierbei beträgt der Druck bevorzugt > 6 bar (was einer Porengröße von ca. 100 nm entspricht), bevorzugt größer 10 bar (was einer Porengröße von ca. 60 nm entspricht) bzw. besonders bevorzugt > 20 bar (was einer Porengröße von < 32 nm entspricht).

Der Bubble Point beschreibt die größte Pore und damit ein Maß für Fehlstellen der Membran. Die Qualität der Membran hat somit zwei Kenngrößen:
1) Der Bubble Point
2) Mittlere Porengröße

Gemäß dem ersten Kriterium werden eher Fehlstellen gemessen, gemäß dem zweiten Kriterium die eigentliche Porosität der Membran. Der Durchfluss der Membran für Gase am Bubble Point beträgt typischerweise <0.01% des Flusses bei der mittleren Porengröße.

Bevorzugte mittlere oder durchschnittliche Porengrößen der erfindungsgemäßen Membran betragen dabei von 15 bis 30 nm, bevorzugt von 18 bis 25 nm.

Die Poren werden dabei selbsttätig im Fällschritt bzw. in einem anschließenden Waschschritt erzeugt und durch den Vernetzungsschritt fixiert.

Die Stickstoffpermeabilität J_{N2} der erfindungsgemäßen Polymermembran beträgt dabei bevorzugt 10 bis 1000 m³/(m².h.bar). Die Bestimmung der Stickstoffpermeabilität erfolgt mit einer Gasbürette. Dabei wird der Gasfluss pro Zeiteinheit gemessen und auf die Fläche und den Druck bezogen. Alternativ eignet sich ebenso die Verwendung eines Gasmessgerätes, z.B. Definer 220 von BIOS zur Bestimmung des Gasflusses. Ebenso ist es möglich, die Bestimmung des Gasflusses bei 3 bar, mit einem Porometer (z.B. Porolux®500) zu bestimmen.

Die Poren sind dabei bevorzugt von der Oberseite zur Unterseite der Membran asymmetrisch mit zunehmender Porengröße in einer Schaumstruktur angeordnet. Die Membran kann im unteren Bereich auch Kavernen aufweisen. Die Schaumstruktur ist mindestens in einer Stärke von 2 µm ausgebildet. Vorteilhafterweise beträgt die Schaumstruktur 10 -40 µm bis zu den Kavernen, bzw. die Membran ist frei von Kavernen. Die Membranstruktur wird mit rasterelektronischen Aufnahmen untersucht.

Die vorliegende Erfindung wird anhand den nachfolgenden Ausführungsformen, Figuren sowie Beispielen näher beschrieben, ohne die Erfindung auf die dargestellten speziellen Parameter zu beschränken.

Dabei zeigen
- Figur 1a: eine REM-Aufnahme eines Querschnitts einer erfindungsgemäßen Polyacrylnitril-Flachmembran
- Figur 1b: ein vergrößertes Detail der in Figur 1a dargestellten Polyacrylnitril-Flachmembran
- Figur 1c: eine REM-Aufnahme der Oberfläche der in den Figuren 1a und 1b dargestellten Polyacrylnitril-Flachmembran
- Figur 2: das Reaktionsprinzip der Vernetzungsmembran vom Polyacrylnitril
- Figur 3: eine FTIR-Aufnahme einer erfindungsgemäß hergestellten Membran
- Figur 4: das Reaktionsprinzip der Ketimin-Bildung. Verwendete Stoffe und Methoden
- PAN-1:: Acrylnitril (93.5%)-Methacrylat (6%)-Natriummethallylsulfonat (0.5%)-Copolymer. Inhärente Viskosität (DMF) 140 cm³/g.
- PAN-2:: Polyacrylnitril Homopolymer (max.0.5 % Methylacrylat). Inhärente Viskosität (DMF) 194 cm³/g.

Polyethylenimine:
Lupasol G20 = PEI-G20 (Mw = 1300 g/mol))
Lupasol WF = PEI-WF (Mw = 25000 g/mol)
Lupasol P = PEI-P (Mw = 750000 g/mol)

PEG: Polyethylenglycol 200
TEG: Tetraethylenglycol
MIBK: Methylisobutylketon

Viskosität:
Für die Gießlösungen wird die Viskosität mit einem Rotationsviskometer DIN/ISO-Viskosimeter 550 (von Thermo Haake) verwendet. Der Wert bei einer Drehzahl von 100 rpm wird in Pa*s angegeben.
REM: rasterelektronische Aufnahme. Bruch in flüssigem Stickstoff oder Oberfläche, beides mit Au besputtert.
Porometer: Es wurde ein Porometer Porolux® 500 verwendet. Der Blasenpunkt (Bubble Point) wird beim ersten messbaren Fluss angegeben und entspricht der größten Pore. Die mittlere Porengröße ist die Porengröße bei 50% des Gesamtflusses.
%-Angabe: Die Prozentangabe sind Massen.

Es wurde ein Polyestervlies (PET) verwendet mit einem Flächengewicht von ca. 100 g/m² und einer Dicke von 160 µm.

Um vernetzte Membranen zu erhalten wird erfindungsgemäß ein Vernetzer, z.B. PEI zur Gießlösung zugegeben werden. Gießlösungen, die Ketone wie Aceton oder Diacetonalkohol enthalten können nicht mit PEI gemischt werden, da diese mit PEI zu Iminen oder Enaminen umgesetzt werden können. Bevorzugt kann daher zu Gießlösungen mit 1,3-Dioxolan, TEG oder PEG der Vernetzer PEI gegeben werden, um die Reaktivität für die Vernetzung mit den Cyanogruppen zu erhalten.

Durch Zugabe von PEI zur Gießlösung wird der Vernetzer vor der Membranherstellung zugegeben und es wird eine vernetzte, lösemittelstabile Membran nach den üblichen Verfahrensschritten erhalten. Die Vernetzungsreaktion tritt erst bei erhöhter Temperatur auf. Das heißt das Polymer wird zunächst ohne Vernetzer, gegebenenfalls bei erhöhter Temperatur gelöst, und der Vernetzer bei RT zugegeben. Hierbei ist es vorteilhaft unter Schutzgas zu arbeiten, um Nebenreaktionen zu vermeiden.

Die Vernetzungsreaktion kann nach dem Fällen und dem gegebenenfalls erfolgenden Waschen der Membran bei Temperaturen von typischerweise 120 bis 150°C erfolgen, wobei lösemittelstabile, offene Membranen erhalten werden. Die Vernetzung wird vorzugsweise in Wasser bei Temperaturen von 60 - 100°C durchgeführt. Hierbei sind Temperaturen von 90 - 95°C vorteilhaft. Ausreichende Vernetzung tritt bei diesen Temperaturen schon nach 20 - 60 min ein. Üblicherweise sind 30 min bei 95°C ausreichend. Eine weitere Vernetzung kann bei erhöhter Temperatur im Trockenschrank nach dem Heißwaschen erfolgen.

### Beispiel 1 (Membran aus DMSO mit 10% PEI)

Aus PAN-1 wird eine 13%ige Lösung in DMSO angesetzt, die bezogen auf PAN-110 % PEI-WF enthält. PEI-WF wird erst nach dem Lösen des PAN-1 zur Gießlösung zugesetzt und danach nicht mehr über RT erwärmt. Die Viskosität betrug 2.7 Pa*s. Es werden nur Lösemittel und PEI verwendet mit Wassergehalten kleiner 0.1%.

Auf einer Membranziehmaschine wird mit einer Rakel bei einem Spalt von 250 µm bei 2 m/min auf einem Polyestervlies eine Membran hergestellt. Es wird in Wasser von 20°C gefällt, bei 45°C 16 h gewaschen und 2h bei 105°C getrocknet. Dabei verfärbt sich die Membran nach gelb, wird etwas steifer aber bleibt flexibel ohne bei Biegebelastung zu Brechen. In der REM-Aufnahme sind große Kavernen zu sehen. Die Deckschicht der Membran hat eine Dicke von 0,5 µm bei einer Gesamtdicke (ohne PET-Vlies) von ca. 90 µm. Der Gasfluss der porösen Membran liegt bei ca. 10 m³/[m²*h*bar].

### Beispiel 2 (Membran aus DMSO/IPA(9/1) mit 10% PEI)

Um die Gießlösung näher an die Fällgrenze zu bringen wurde zur Gießlösung das Nichtlösemittel Isopropanol zugesetzt. Die Struktur der Membran änderte sich nicht, obwohl der Spalt des Rakels auf 200 und 250 µm eingestellt wurde. In den REM-Aufnahmen sind große Kavernen zu sehen, die in einer ca. 0,5 µm dicken Deckschicht an der Membranoberseite enden (s. Beispiel 2).

15 g PAN-1 werden in einer Mischung aus 88,5 g DMSO mit 9,8 g Isopropanol bei 60°C unter N2-Schutzgas gelöst. Bei RT wird mit 1,7 g PEI-WF versetzt und 24 h weiter unter Schutzgas gerührt. Es wurde 16 h unter Schutzgas stehen gelassen und wie nach Beispiel 1 Membranen gezogen. Die Viskosität der Lösung betrug 6.2 Pa*s. Der Rakelspalt wurde auf 250 µm und 200 µm eingestellt und die Ziehgeschwindigkeit auf 0,6 m/min verringert. Die Fällbadtemperatur betrug 18°C, die Waschzeit bei 45°C 16h. Die Membranen wurden 2 h bei 105°C getrocknet. Der Gasfluss der Membranen betrug ca. 5 m³/[m²*h*bar] (Spalt 250 µm) und ca. 8 m³/[m²*h*bar] (Spalt 200 µm). Die Gesamtdicke der Membranen lag ohne PET-Vlies bei 42 µm (250 µm Spalt) und 35 µm (200 µm Spalt).

### Beispiel 3 (Mit PEI vernetzte Membranen aus DMSO mit 1,3-Dioxolan und/oder TEG, PEG als Nichtlösemittel)

In Beispiel 3 sind in Tabelle 5 sieben erfindungsgemäße Gießlösungen 1 bis 7 beschrieben, die nach Temperaturbehandlung alle zu lösemittelstabilen Membranen führen. Der Gehalt an Vernetzer PEI kann zwischen 3 und 20% betragen. Aus den Gießlösungen wurden wie in Beispiel 1 Membranen auf einer Membranziehmaschine hergestellt. Die Herstellungsbedingungen und die Eigenschaften sind in Tabelle 2 beschrieben.

Die Gießlösungen wurden aus PAN-1 (GL 1, 2) oder PAN-2 (GL3-7) hergestellt. Als Lösemittel wurden DMSO-1,3-Dioxolan, bzw. DMSO-DMF-1,3-Dioxolanmischungen verwendet. In den angegebenen Konzentrationen wurden gut gießfähige Polymerlösungen mit dem Vernetzer PEI erhalten. Als Vernetzer wurde PEI-WF (GL 1-3) und PEI-P (GL3-7) verwendet. Besonders gut gelingt die Vernetzung mit dem hochmolekularen PEI-P. Die Gießlösungen wurden wie in Beispiel 2 beschrieben angesetzt und wie in Beispiel 1 wurden daraus Membranen hergestellt. Die Ziehparameter, der N₂-Fluss und die Struktur nach REM-Aufnahmen sind in Tabelle 2 zusammengefasst. Um eine durchgehend Schaumstruktur zu erhalten kann den Gießlösungen noch TEG oder PEG zugesetzt werden. Die Polymerkonzentration soll nicht wesentlich unter 14% (PAN-1) bzw. 10 % (PEI-2) liegen.

**Tabelle 1**

| GL-Nr. | Konzentration PAN, % | Gehalt PEI bezogen auf PAN, % | Lösemittelgemisch | Verhältnis Lösemittel, w/w | Dynamische Viskosität, Pa*s |
|---|---|---|---|---|---|
| 1 | 14 | 9,3 | DMSO/DMF/1,3-Dioxolan | 4/4/2 | 2.6 |
| 2 | 14 | 19 | DMSO/1,3-Dioxolan | 8/2 | 3.8 |
| 3 | 9,5 | 10 | DMSO/DMF/1,3-Dioxolan | 4/4/2 | nb |
| 4 | 9,9 | 10 | DMSO/1,3-Dioxolan | 6/4 | nb |
| 5 | 9,9 | 10 | DMSO/1,3-Dioxolan | 6/4 | 13,2 |
| 6 | 9,9 | 5,5 | DMSO/1,3-Dioxolan | 6/4 | 9,1 |
| 7 | 9,9 | 3 | DMSO/1,3-Dioxolan | 6/4 | 5,2 |
| GL1, 2 aus PAN-1 mit PEI-WF; GL 3 PEI-2 mit PEI-WF; GL 3 - 7 PEI-2 mit PEI-P | | | | | |

**Tabelle 2**

| GL-Nr. | Membran | Spalt, µm | Ziehgeschwindigkeit, m/min | JN2, m³/[m²*h*ba r] | Abstand Kaverne, µm | Membrandicke, µm |
|---|---|---|---|---|---|---|
| 1 | A | 225 | 2 | 21 | <0.5 | 55 |
| 2 | B | 225 | 2 | 180 | <0.5 | 40 |
| 3 | C | 225 | 1 | 200 | nb | nb |
| 3 | D | 225 | 1 | 140 | nb | nb |
| 4 | E2 | 225 | 1 | 300 | 9 | 62 |
| 5 | F | 225 | 1 | 430 | 6 | 79 |
| 6 | G | 200 | 1 | 520 | 9 | 60 |
| 7 | H | 200 | 1 | 480 | 9 | 35 |
| 7 | I | 220 | 1 | 640 | 6 | 70 |

Die Membranen A, B aus Tabelle 2 haben sehr große Kavernen bei nur einigen hundert Nanometern dicker Deckschicht. Diese Membranen wurden 3 h in Wasser von 22°C gewaschen und danach für 2 h bei 105°C getrocknet. Die Farbänderung erfolgte wie in Beispiel 1 beschrieben nach gelb während der Temperaturbehandlung im Trockenschrank. Membranen C, D (Tab. 2) wurden aus der gleichen Gießlösung hergestellt, aber unterschiedlich behandelt. Membran D wurde nach dem Waschen (3 h, 22°C) für 2 h bei 105°c getrocknet, die Vergleichsmembran C wurde einem Lösemittelaustausch unterzogen. Dabei wurde das Wasser in den Poren in drei Schritten durch Isopropanol ersetzt und in drei weiteren Schritten zu n-Heptan gewechselt. Nach dem Lufttrocknen wurde die Membran für 2 h bei 105°C im Trockenschrank vernetzt. Der N₂-Fluss stieg von 140 m³/[m²*h*bar] (Membran D) auf 200 m³/[m²*h*bar] an bei Lösemittelaustausch (Membran C).

Membranen aus Gießlösung 4 (Membran E) wurden nach drei Methoden nach dem Ziehen weiterbehandelt:
Der Versuch E wurde auf drei unterschiedliche Methoden durchgeführt, was zu den einzelnen unterschiedlichen Membranen E1, E2 und E3 führte.

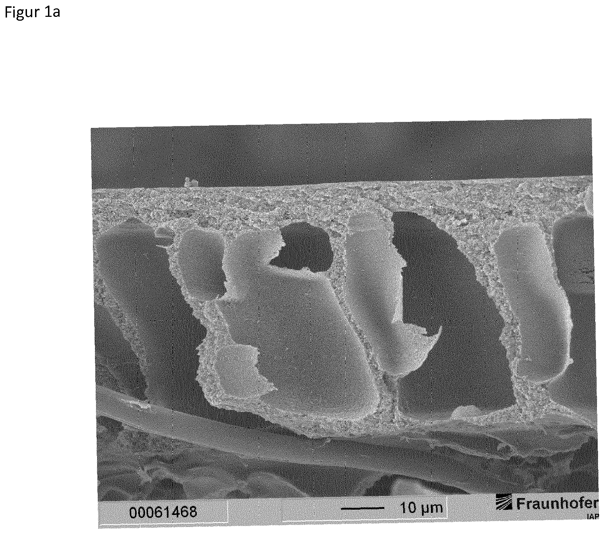

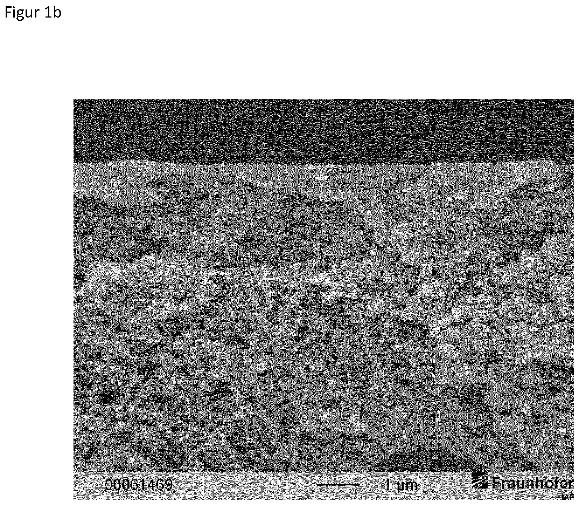

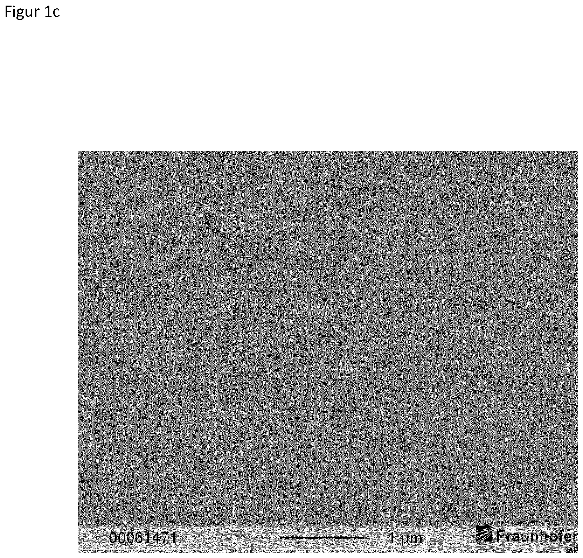

Membran E1 (nicht in Tabelle 2 angeführt) wurde 3 h bei 23°C gewaschen und direkt für 2 h bei 120°C getrocknet. Membran E2 wurde nach dem Waschen für 3 h bei 23°C für 0,5 h in Wasser bei 95°C weiter gewaschen und danach sofort bei 120°C für 2 h getrocknet. Beim Wässern bei 95°C trat Vernetzung auf, sichtbar an einer Verfärbung der Membran nach gelb. Diese Farbe vertiefte sich nach der Temperaturbehandlung im Trockenschrank. Membran E3 (nicht in Tabelle 2 angeführt) wurde für 3 h bei 40°C gewaschen und danach direkt bei 120°C für 2 h getrocknet. Im Vergleich führten alle drei Behandlungsmethoden zu vernetzten Membranen. Allerdings zeigten E1 und E3 eine rauhe Oberfläche mit sehr großen Poren. Nur Membran E2, die für 0,5 h bei 95°C in Wasser vernetzt wurde mit nachfolgender Vernetzung im Trockenschrank bei 120°C, zeigte eine glatte, glänzende Oberfläche mit genügender Dicke der Deckschicht von 9 µm und einer mittleren Porengröße (aus dem REM) von 28 nm. Die REM-Aufnahmen der Membran E2 sind in Figur 1a, 1b und 1c abgebildet. Fig. 1a zeigt den gesamten Membranquerschnitt, Fig. 1b einen Ausschnitt der Schaumstruktur oberhalb der Kavernen, Fig. 1c zeigt die Membranoberfläche.

In Figur 1a ist ein Querschnitt durch die erfindungsgemäß hergestellte Membran E2 dargestellt. Erkennbar ist eine die Membran begrenzende Grenzschicht (oben in der Aufnahme dargestellt), die durchgängig ausgebildet ist. Im Inneren der Membran sind Kavitäten erkennbar, die beim Fällschritt entstehen.

Figur 1b zeigt einen vergrößerten Ausschnitt aus Figur 1a, hierbei ist die die Membran abschließende Grenzschicht dargestellt. Erkennbar ist, dass in dieser Grenzschicht keine Kavitäten enthalten sind. Figur 1c zeigt eine Oberflächenaufnahme der Membran E2, d.h. eine Aufsicht auf die in Figur 1a, bzw. 1b im Querschnitt dargestellte Grenzschicht. Erkennbar ist, dass die Oberfläche der Membran E2 eine weitestgehend homogene Verteilung der Poren zeigt.

Membranen F bis I aus Tabelle 2 wurden jeweils nur 1 h im Fällbad belassen, für 0,5 h in 95°C heißem Wasser behandelt und feucht für 2 h bei 120°C getrocknet. Alle Membranen aus Tabelle 2 E bis I zeigen eine glatte, glänzende Oberfläche.

Mit dem Porometer wurden die Membranen F bis I aus Tabelle 2 weiter charakterisiert. Die Werte sind in Tabelle 3 berichtet. Die mittlere Porengröße liegt bei den vernetzten Membranen zwischen 23 und 25 nm. Die Porengröße am Bubble Point liegt unter 50 nm zwischen 40 -45 nm bzw. bei 27 nm für Membran F.

**Tabelle 3**

| GL-Nr. nach Tabelle 5, 6 | Membran nach Tabelle 6 | Porengröße BP, nm | Mittlere Porengröße, nm |
|---|---|---|---|
| 5 | F | 27 | 23 |
| 6 | G | 40 | 24 |
| 7 | H | 45 | 25 |
| 7 | I | 44 | 24 |

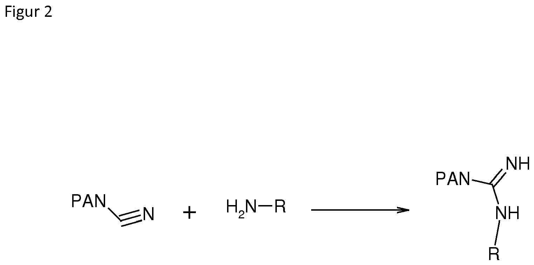

In Figur 2 ist das Prinzip der bei der Vernetzung von Polyacrylnitril ablaufenden chemischen Reaktion dargestellt. Die Reaktion wird am Beispiel eines Vernetzers mit einer Amino-Gruppe, wie beispielsweise PEI, erläutert. Dabei erfolgt ein nucleophiler Angriff der Aminogruppe auf die Cyanogruppe des Acrylnitrils. Bei Vorhandensein von mindestens zwei Aminogruppen im Vernetzer kann eine Verknüpfung verschiedener Polymerketten des Polyacrylnitrils auf die dargestellte Art und Weise erfolgen.

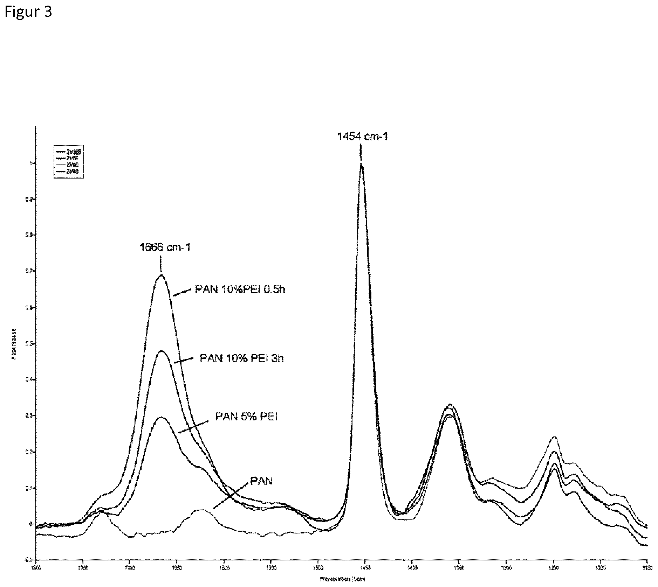

Da die Vernetzungsreaktion zu Produkten führt, die im IR ein intensives Signal ergeben wurden einige vernetzte Membranen mit dem FT-IR im ATR-modus analysiert. PAN zeigt im FT-IR neben der Cyanid-Bande bei 2242 cm⁻¹ ein intensives Signal bei 1454 cm⁻¹. Der Vernetzer PEI zeigt nur wenig intensive Signale bei 1478 und 1565 cm⁻¹. Fünf mit PEI vernetzte Membranen aus Tabelle 2 (E und F mit je 10% PEI, G mit 5% PEI und H mit 3% PEI) sowie eine PAN-Membran ohne Vernetzer wurden im FT-IR untersucht. Die FT-IR-Aufnahmen sind in Figur 3 dargestellt. Zur Vergleichbarkeit wurde die Intensität auf 1454 cm⁻¹ normiert. Durch die Vernetzung entstand ein neues Signal bei 1666 cm⁻¹, das der Amidinbindung zugeordnet werden kann. Die Intensität des Signals und damit die Vernetzung ist der Menge des PEI in der Gießlösung proportional. Ein weiterer, wichtiger Faktor ist die Wässerungszeit und die Temperatur bei der Membranherstellung. Bei 3 h Wässerung bei 22°C ist das für die Vernetzung typische Signal weniger intensiv. Es wurde also durch längere Waschzeit Vernetzer PEI mit dem Wasser entfernt. Die beste Vernetzung wird erhalten, wenn nach dem Fällen der Membran die Membran nur 5 Minuten bis 30 Minuten im Fällbad verbleibt und direkt bei 90 - 95°C weiter unter Vernetzungsbedingungen gewaschen wird.

### Beispiel 4 (Nachweis von Aminogruppen der vernetzten Membran)

Von der Membran F nach Beispiel 3, Tabelle 2 wurde ein Membranstück mit einer Fläche von 45,3 cm² in kleine Stücke zerschnitten. Die maximal darin enthaltene Menge an PEI-P wurde auf 10 mg berechnet. Mit 10 ml 0.1 N HCl wurde primäres, sekundäres und tertiäres Amin vollständig neutralisiert. Der Überschuss an HCl wurde mit 0.1 N NaOH zurück titriert. Die in der Membran vorhandene Menge an zugänglichem Amin wurde zu 1,8 mg berechnet. Dies entspricht einer nach der Membranherstellung einschließlich Waschen und Vernetzen einer Menge von ca. 18% des eingesetzten Amines (PEI). Dies ermöglicht eine weitere, chemische Vernetzung der Membran mit bekannten Methoden wie bi- oder multifunktionellen Säuren, Isocyanaten oder dergleichen.

In den folgenden Beispielen wurde teilweise das Nichtlösungsmittel 1,3-Dioxolan mit Ethyllactat ersetzt, statt gefriergetrocknetem PEI-P die handelsübliche 50% ige Lösung eingesetzt oder das PEI-P azeotrop getrocknet. Weiterhin wurde das Polyethylenimin mit MIBK modifiziert. Dadurch wird eine Schutzgruppe eingeführt, die die Reaktivität der Vernetzung blockiert. Durch den Fällprozeß in Wasser und die Temperaturbehandlung wird die Schutzgruppe wieder abgespalten und

### Beispiel 5 (Gießlösung aus DMSO mit Zusatz Ethyllactat und PEI-P aus 50% wässriger Lösung)

Aus PAN-2 wurde in DMSO/Ethyllactat (84/16) eine 9,4 %ige Lösung hergestellt, die 5% PEI-P bezogen auf das PAN-2 enthielt. Dazu wurde eine 50%ige, wässrige Lösung von PEI-P mit Ethyllactat verdünnt, um einen PEI-P-Gehalt von 10% zu erreichen. PAN-2 wurde in DMSO/Ethyllactat gelöst und die PEI-P-Lösung zugetropft und bei RT gut verrührt. Die Lösung wurde druckfiltriert und 2h bei RT entgast. Die Viskosität betrug 8,23 Pa*s. Es wurden Membranen gezogen mit den Parametern: Spalt= 200 µm, Ziehgeschwindigkeit= 1 m/min. Die Membranen wurden 1,5h bei 90°C in Wasser gewaschen und bei 105°C 2h mit Umluft im Trockenschrank getrocknet.

Der Bubble Point lag bei 137 +/-23 nm, die mittlere Porengröße bei 31 +/-3,9 nm. Bei 3 bar wurde ein Stickstofffluss von 400 - 450 m³/m²*h*bar gemessen. Die Viskosität der verschlossenen Gießlösung stieg nach 9 Tagen auf 9,1 Pa*s an. Es wurden nach gleichen Parametern erneut Membranen hergestellt. Nach 9 Tagen Alterung der Gießlösung lag der Bubble Point in etwa gleich bei 138 +/-40 nm, die mittlere Porengröße reduzierte sich auf 26,6 +/-3,6 nm. Der Stickstofffluss bei 3 bar gemessen verringerte sich unwesentlich auf 370 - 400 m³/m²*h*bar.

### Beispiel 6 (Gießlösung aus DMSO mit Zusatz Ethyllactat und 5% azeotrop getrocknetem PEI-P)

Zunächst wurde PEI-P mit Toluol als Schleppmittel azeotrop getrocknet und in DMSO/Ethyllactat (84/16) als 10%ige Lösung hergestellt. PAN-2 wurde in DMSO/Ethyllactat (84/16) gelöst und bei RT mit der Lösung von PEI-P versetzt und gut verrührt. Die Konzentration an PAN-2 betrug 9,4%; der Gehalt an PEI-P bezogen auf PAN-2 lag bei 5.1%. Die Lösung wurde druckfiltriert und 2h bei RT entgast. Die Viskosität betrug 9,87 Pa*s. Es wurden Membranen gezogen mit den Parametern: Spalt= 200 µm, Ziehgeschwindigkeit= 1 m/min. Die Membranen wurden 1,5h bei 90°C in Wasser gewaschen und bei 90°C mit Umluft im Trockenschrank getrocknet.

Der Bubble Point lag bei 28,3 +/-0,5 nm, die mittlere Porengröße bei 23,1 +/-0,7 nm. Der Stickstofffluss bei 3 bar gemessen lag bei 230 m³/m²*h*bar. Nach einem Tag Alterung wurden mit den gleichen Parametern erneut Membranen gezogen. Es wurde 7h bei 90°C in Wasser behandelt und an der Luft getrocknet.

Der Bubble Point lag bei 28,9 +/-4,5 nm, die mittlere Porengröße bei 22,5 +/-0,6 nm. Der Stickstofffluss bei 3 bar gemessen lag bei 260 m³/m²*h*bar.

Die Viskosität der Gießlösung wurde nach 16 Tagen erneut gemessen und es wurde ein Wert von 10,0 Pa*s gefunden. Damit hat sich die Viskosität in 16 Tagen Standzeit 9,87 auf 10,0 Pa*s nur unwesentlich erhöht und die reaktive Gießlösung ist ausreichend stabil, um Membranen mit definierten Eigenschaften herzustellen.

### Beispiel 7 (Gießlösung aus DMSO mit Zusatz Ethyllactat und 10% azeotrop getrocknetem PEI-P)

Es wurde wie in Beispiel 6 eine Gießlösung hergestellt, wobei der Gehalt an PEI-P jedoch auf 10% verdoppelt wurde. Die Konzentration an PAN-2 lag bei 9,4% und es wurde eine Viskosität von 9,52 Pa*s gemessen. Die Viskosität war nach drei Tagen Alterung stabil. Nach Druckfiltration wurde 1 Tag zum Entgasen stehen gelassen und Membranen mit den Parametern nach Beispiel 6 hergestellt. Die Membranen wurden über Nacht an der Luft getrocknet.

Der Bubble Point lag bei 23 nm, die mittlere Porengröße wurde zu 20 nm bestimmt. Der Stickstofffluss bei 3 bar gemessen lag bei 200 m³/m²*h*bar.

### Beipiel 8 (Herstellung von PEI-Ketimin)

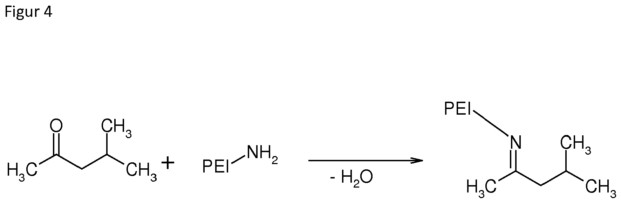

Eine 50%ige Lösung von PEI-P in Wasser wurde gefriergetrocknet. 11,3 g des gefriergetrockneten PEI-P wurden in einem Kolben mit Wasserabscheider und Kühler mit 120 g Methylisobutylketon (MIBK) überschichtet und unter Magnetrühren über Nacht zum Rückfluss erhitzt. Das überschüssige MIBK wurde am Rotationsverdampfer abgezogen und 26,7 g Rückstand (PEI-Ketimin) erhalten. Die chemische Reaktion ist in Figur 4 dargestellt, bei der stattfindenden Reaktion reagiert der NH₂-Terminus des PEI mit der Keto-Gruppe des Ketons.

### Beispiel 9 (Gießlösung aus DMSO/1,3-Dioxolan und PEI-Ketimin 20%)

Aus dem PEI-Ketimin von Beispiel 8 wurde in 1,3-Dioxolan eine 25% ige Lösung hergestellt. PAN-2 wurde in DMSO/1,3-Dioxolan (47/53) gelöst und mit einem Teil der PEI-Ketiminlösung versetzt und gut vermischt. Die Lösung zeigte eine leichte Trübung. Der Gehalt an PAN-2 lag bei 9.3%, im Verhältnis zu PAN-2 wurden 20% PEI-MIBK zugesetzt. Die Gießlösung wurde druckfiltriert und durch Stehen über Nacht bei RT entgast. Die Viskosität der Lösung betrug 10,3 Pa*s. Es wurden Membranen bei einem Spalt von 200 µm und einer Ziehgeschwindigkeit von 1 m/min hergestellt. Die Abdampfzeiten an der Luft wurden zu 0.5 min, 1 min und 3 min eingestellt und die Membranen in Wasser bei RT gefällt. Es wurde 2,5 h bei 75°C und weitere 1,5 h bei 90°C gewaschen und an der Luft getrocknet.

In Abhängigkeit von der Abdampfzeit verringerte sich die mittlere Porengröße von 33,4 nm (0.5 min) auf 30,9 nm (1 min) zu 29,1 nm (3 min). Der Bubble Point lag bei ca. 50 nm und änderte sich nicht.

Der Stickstofffluss bei 3 bar gemessen lag bei 300 m³/m²*h*bar (0,5 und 1 min Abdampfzeit), nach 3 min. verringerte sich der Fluss auf 250 m³/m²*h*bar. Die Membranen wurden temperaturbehandelt und die Stabilität in DMF, dem besten Lösungsmittel für PAN, gemessen. Membranen mit 3 min. Abdampfzeit wurden mit Umluft im Trockenschrank mit einer Rampe von 1°C von 40 auf 125°C erhitzt und 50 min. bei dieser Temperatur belassen (T1). Ein Teil der Membranen wurde zusätzlich von 125°C mit einer Rampe von 1°C auf 150°C erhitzt und 50 min. bei dieser Temperatur belassen (T2). Eine weitere Membran wurde mit einer Rampe von 1°C von 50°C auf 135°C erhitzt und 2h bei dieser Temperatur gehalten (T3). Proben der temperaturbehandelten Membranen T1, T2 und T3 wurden in DMF eingelegt und nach 2 Tagen bei RT mit DMF/Wasser 1+1 und reinem Wasser gespült, mit Ethanol abgewaschen und bei 85°C für 1 h getrocknet. Die Daten sind in Tabelle 4 zusammengestellt. Durch die Behandlung im Lösungsmittel DMF verringern sich die mittlere Porengröße und der Stickstofffluss, die erhaltenen Membranen werden jedoch nicht zerstört.

**Tabelle 4**

| Membran Nr. | Bubble Point, nm | Mittlere Porengröße, nm | Stickstofffluss, m³/m²*h*bar |
|---|---|---|---|
| T1 | 54 | 28,8 | 121 |
| T1 DMF | 164 | 27,4 | 38 |
| T2 | 41 | 28,9 | 60 |
| T2 DMF | 39 | 23,5 | 40 |
| T3 | 66 | 32,0 | 200 |
| T3 DMF | 130 | 30,0 | 85 |

Der Grad der Vernetzung wurde analog zu den Ausführungen zu Beispiel 3 mit FT-IR analysiert und ein intensives Signal bei 1666 cm⁻¹ gefunden. Die Intensität stieg durch die Wärmebehandlung im Trockenschrank an.

### Beispiel 10 (Gießlösung aus DMSO/1,3-Dioxolan und PEI-Ketimin 10%)

Wie in Beispiel 9 wurde eine Gießlösung aus PAN-2 und PEI-Ketimin in DMSO/1,3-Dioxolan hergestellt. Die Konzentration an PAN-2 betrug 8,9%, der Gehalt an PEI-MIBK lag bei 10% bezogen auf PAN-2. Die Viskosität der Gießlösung lag bei 7,29 Pa*s. Es wurden nach den Parametern in Beispiel 9 Membranen hergestellt, wobei die Abdampfzeit 2 min. betrug bevor die Membranen in Wasser bei RT gefällt wurden. Die Membranen wurden bei 75°C 0.5 h und bei 90°C 1 h gewaschen und über Nacht an der Luft getrocknet.

Der Bubble Point der luftgetrockneten Membranen lag bei 30 nm, die mittlere Porengröße bei 19 nm. Der Stickstofffluss wurde zu 200 m³/m²*h*bar bestimmt.

Die Membranen wurden für 1 h bei 120°C mit Umluft im Trockenschrank behandelt und die Daten mit dem Porometer gemessen. Der Bubble Point erhöhte sich durch die Temperaturbehandlung auf 60 +/-10 nm, die mittlere Porengröße auf 20,8 +/-1,9 nm. Der Stickstofffluss lag nach der Temperaturbehandlung bei 270 m³/m²*h*bar.

## Patentansprüche

1. Lösung zur Herstellung einer Polymermembran, enthaltend oder bestehend aus
a) einem Copolymer auf Basis von (Meth)acrylnitril erhältlich durch Copolymerisation von (Meth)acrylnitril mit mindestens einem Copolymeren, ausgewählt aus der Gruppe bestehend aus (Meth)allylsulfonsäure oder deren Salzen oder Mischungen hiervon,
b) mindestens einen Vernetzer für Poly(meth)acrylnitril oder ein Copolymer auf Basis von (Meth)acrylnitril, wobei der Vernetzer
- ein Aminogruppen haltiges Polymer ist, ausgewählt aus der Gruppe bestehend aus Polyethylenimin (PEI), Polyvinylamin, Polyallylamin und/oder Mischungen hieraus und/oder
- in situ aus blockiertem Polyethylenimin, blockiertem Polyvinylamin, blockiertem Polyallylamin und/oder Mischungen hieraus freigesetzt wird,
sowie
c) mindestens ein Lösungsmittel für Poly(meth)acrylnitril oder ein Copolymer auf Basis von (Meth)acrylnitril, in dem die zuvor genannten Bestandteile gelöst vorliegen.

2. Lösung nach vorhergehendem Anspruch, **dadurch gekennzeichnet, dass** das Lösungsmittel ausgewählt ist aus der Gruppe bestehend aus Dimethylsulfoxid (DMSO), Dimethylformamid (DMF), N-Methylpyrrolidon (NMP), Dimethylacetamid (DMAC), Tetrahydrothiophen-1,1-dioxid (Sulfolan), wässrige Lösungen von Natriumthiocyanat und/oder Zinkchlorid, sowie Mischungen hiervon.

3. Lösung nach einem der beiden vorhergehenden Ansprüche, **dadurch gekennzeichnet, dass**
a) das Polyethylenimin (PEI), Polyvinylamin oder Polyallylamin ein zahlengemitteltes Molekulargewicht M_{w} von 25.000 bis 750.000 g/mol aufweist und/oder
b) das blockierte Polyethylenimin (PEI), blockierte Polyvinylamin oder blockierte Polyallylamin bevorzugt ein zahlengemitteltes Molekulargewicht M_{w} von 25.000 bis 750.000 g/mol aufweist.

4. Lösung nach vorhergehendem Anspruch, **dadurch gekennzeichnet, dass** das blockierte Polyethylenimin ein Ketimin des Polyethylenimins, das blockierte Polyvinylamin ein Ketimin des Polyvinylamins und das blockierte Polyallylamin ein Ketimin des Polyallylamins ist, wobei die Ketogruppe bevorzugt von aliphatischen Ketonen, insbesondere von Methyl-*iso*-butylketon abgeleitet ist.

5. Lösung nach einem der Ansprüche 1 bis 4, **dadurch gekennzeichnet, dass** ein Nichtlösungsmittel, in dem sich Poly(meth)acrylnitril oder das Copolymer auf Basis von (Meth)acrylnitril nicht löst und das mit dem Lösungsmittel mischbar ist, enthalten ist, wobei das Nichtlösungsmittel bevorzugt ausgewählt ist aus der Gruppe bestehend aus 1,3-Dioxolan, Polyalkylenglycol, insbesondere Polyethylenglycol, Tetraalkylenglycol, insbesondere Tetraethylenglycol, Alkoholen, insbesondere Isopropanol, Ethanol, Alkyllactaten, insbesondere Ethyllactat sowie Mischungen hiervon.

6. Lösung nach einem der Ansprüche 1 bis 5, **dadurch gekennzeichnet, dass**
a) der Gesamtgehalt von Poly(meth)acrylnitril, des Copolymers auf Basis von (Meth)acrylnitril oder Mischungen hiervon, bezogen auf das Lösungsmittel sowie ggf. der Summe aus Lösungsmittel und Nichtlösungsmittel von 1 bis 30 Gew.-%, bevorzugt 5 bis 20 Gew.-%, besonders bevorzugt 7,5 bis 15 Gew.-% beträgt und/oder
b) der Gesamtgehalt des Vernetzers, bezogen auf Poly(meth)acrylnitril, das Copolymer auf Basis von (Meth)acrylnitril oder Mischungen hiervon von 1 bis 50 Gew.-%, bevorzugt 3 bis 20 Gew.-%, besonders bevorzugt 7,5 bis 12,5 Gew.-% beträgt und/oder
c) der Gehalt des Nichtlösungsmittels, bezogen auf den Gehalt des Lösungsmittels oder des Gemischs aus mindestens zwei Lösungsmitteln von 50 bis 60 Gew.-%, bevorzugt 15 bis 45 Gew.-% beträgt.

7. Lösung nach einem der Ansprüche 1 bis 6, **gekennzeichnet durch** eine Viskosität von 1,5 bis 20 Pa˙s, bevorzugt 2 bis 10 Pa˙s.

8. Verfahren zur Herstellung einer lösungsmittelstabilen Polymermembran, bei dem eine Lösung, enthaltend oder bestehend aus
a) Poly(meth)acrylnitril, ein Copolymer auf Basis von (Meth)acrylnitril, erhältlich durch Copolymerisation von (Meth)acrylnitril mit mindestens einem Copolymeren, ausgewählt aus der Gruppe bestehend aus (Meth)allylsulfonsäure oder deren Salzen oder Mischungen hiervon,
b) mindestens einen Vernetzer für Poly(meth)acrylnitril oder ein Copolymer auf Basis von (Meth)acrylnitril, wobei der Vernetzer
- ein Aminogruppen haltiges Polymer ist, ausgewählt aus der Gruppe bestehend aus Polyethylenimin (PEI), Polyvinylamin, Polyallylamin und/oder Mischungen hieraus und/oder
- in situ aus blockiertem Polyethylenimin, blockiertem Polyvinylamin, blockiertem Polyallylamin und/oder Mischungen hieraus freigesetzt wird,
sowie
c) mindestens ein Lösungsmittel für Poly(meth)acrylnitril oder ein Copolymer auf Basis von (Meth)acrylnitril, in dem die zuvor genannten Bestandteile gelöst vorliegen
als Film gegossen oder zu einem Hohlfaden versponnen, das Poly(meth)acrylnitril, Copolymer auf Basis von (Meth)acrylnitril oder die Mischung hiervon durch einen Phaseninversionsprozess ausgefällt und das Poly(meth)acrylnitril, Copolymer auf Basis von (Meth)acrylnitril oder die Mischung hiervon durch Temperaturbehandlung bei gegenüber Raumtemperatur erhöhten Temperaturen vernetzt wird, wobei der Film auf ein Vlies aus einem polymeren Material gegossen wird.

9. Verfahren nach Anspruch 8, **dadurch gekennzeichnet, dass** der Film auf auf ein Vlies aus Polyester gegossen wird.

10. Verfahren nach einem der Ansprüche 8 oder 9, **dadurch gekennzeichnet, dass** nach dem Phaseninversionsprozess der erhaltene Film bzw. Hohlfaden mit Wasser gewaschen wird.

11. Verfahren nach einem der Ansprüche 8 bis 10, **dadurch gekennzeichnet, dass**
a) die Temperaturbehandlung bei Temperaturen von 50 bis 150 °C, bevorzugt von 70 bis 120 °C, besonders bevorzugt von 85 bis 99 °C, insbesondere während eines sich an den Phaseninversionsprozess anschließenden Waschschrittes mit Wasser und/oder über einen Zeitraum von 5 min bis 24 Stunden, bevorzug 15 min bis 12 Stunden, besonders bevorzugt von 30 min bis 5 Stunden erfolgt und/oder
b) nach Vernetzung und/oder Waschen ein Trocknen der Membran durchgeführt wird, vorzugsweise in einem Luftstrom mit einer Temperatur zwischen 60 und 120 °C.

12. Polymermembran, herstellbar nach einem Verfahren nach einem der Ansprüche 8 bis 11, **gekennzeichnet durch** eine durchgängig ausgebildete Vernetzung des Poly(meth)acrylnitrils bzw. des Copolymers auf Basis von (Meth)acrylnitril.

13. Polymermembran nach vorhergehendem Anspruch, in Form einer Flachmembran oder Hohlfadenmembran.

14. Polymermembran nach vorhergehendem Anspruch, **dadurch gekennzeichnet, dass**
a) die Dicke der Membran ohne ggf. vorhandenes Substrat von 20 bis 200 µm, bevorzugt von 40 bis 90 µm beträgt und/oder
b) die Porengröße der Membran am Bubble Point von 20 bis 100 nm, bevorzugt 30 bis 50 nm beträgt und/oder
c) eine durchschnittliche Porengröße von 15 bis 30 nm, bevorzugt von 18 bis 25 nm beträgt und/oder
d) eine Stickstoffpermeabilität J_{N2} von 10 bis 1000 m³/(m²·h·bar) beträgt.

15. Polymermembran nach einem der Ansprüche 12 bis 14, **dadurch gekennzeichnet, dass** sie eine Schaumstruktur aufweist.

## Claims

1. Solution for the production of a polymer membrane, comprising or consisting of
a) a copolymer based on (meth)acrylonitrile, obtainable by copolymerisation of (meth)acrylonitrile with at least one copolymer selected from the group consisting of (meth)allyl sulphonic acid or the salts thereof or mixtures hereof,
b) at least one crosslinker for poly(meth)acrylonitrile or a copolymer based on (meth)acrylonitrile, the crosslinker
- is an amino group-containing polymer, selected from the group consisting of polyethylene imine (PEI), polyvinyl amine, polyallyl amine and/or mixtures hereof and/or
- is released in situ, in particular from blocked polyethylene imine, blocked polyvinyl amine, blocked polyallyl amine and/or mixtures or combinations hereof, as well as
c) at least one solvent for poly(meth)acrylonitrile or a copolymer based on (meth)acrylonitrile, in which the previously mentioned components are present in dissolved state.

2. Solution according to the preceding claim, **characterised in that** the solvent is selected from the group consisting of dimethylsulfoxide (DMSO), dimethylformamide (DMF), N-methylpyrrolidone (NMP), dimethylacetamide (DMAC), tetrahydrothiophene-1,1-dioxide (sulfolane), aqueous solutions of sodium thiocyanate and/or zinc chloride and mixtures hereof.

3. Solution according to one of the both preceding claims, **characterised in that**
a) the polyethylene imine (PEI), polyvinyl amine or polyallyl amine has a number-average molecular weight M_{w} of 25,000 to 750,000 g/mol, and/or
b) the blocked polyethylene imine (PEI), blocked polyvinyl amine or blocked polyallyl amine has a number-average molecular weight M_{w} of 25,000 to 750,000 g/mol.

4. Solution according to the preceding claim, **characterised in that** the blocked polyethylene imine is a ketimine of polyethylene imine, the blocked polyvinyl amine is a ketimine of polyvinyl amine and the blocked polyallyl amine is a ketimine of polyallyl amine, the keto group being derived preferably from aliphatic ketones, in particular from methyl-*iso*-butyl ketone.

5. Solution according to one of the claims 1 to 4, **characterised in that** a non-solvent, in which poly(meth)acrylonitrile or the copolymer based on (meth)acrylonitrile does not dissolve and which is miscible with the solvent, is contained, the non-solvent being selected preferably from the group consisting of 1,3-dioxolane, polyalkylene glycol, in particular polyethylene glycol, tetraalkylene glycol, in particular tetraethylene glycol, alcohols, in particular isopropanol, ethanol, alkyl lactates, in particular ethyl lactate and also mixtures hereof.

6. Solution according to one of the claims 1 to 4, **characterised in that**
a) the total content of poly(meth)acrylonitrile, of the copolymer based on (meth)acrylonitrile or mixtures hereof, relative to the solvent and also possibly the sum of solvent and non-solvent, is from 1 to 30% by weight, preferably 5 to 20% by weight, particularly preferably 7.5 to 15% by weight and/or
b) the total content of the crosslinker, relative to poly(meth)acrylonitrile, the copolymer based on (meth)acrylonitrile or mixtures hereof, is from 1 to 50% by weight, preferably 3 to 20% by weight, particularly preferably 7.5 to 12.5% by weight and/or
c) the content of non-solvent, relative to the content of the solvent or of the mixture of at least two solvents, is from 50 to 60% by weight, preferably 15 to 45% by weight.

7. Solution according to one of the claims 1 to 6, **characterised by** a viscosity of 1.5 to 20 Pa·s, preferably 2 to 10 Pa·s.

8. Method for the production of a solvent-stable polymer membrane in which a solution, comprising or consisting of
a) a copolymer based on (meth)acrylonitrile, obtainable by copolymerisation of (meth)acrylonitrile with at least one copolymer selected from the group consisting of (meth)allyl sulphonic acid or the salts thereof or mixtures hereof,
b) at least one crosslinker for poly(meth)acrylonitrile or a copolymer based on (meth)acrylonitrile, the crosslinker
- is an amino group-containing polymer, selected from the group consisting of polyethylene imine (PEI), polyvinyl amine, polyallyl amine and/or mixtures hereof and/or
- is released in situ, in particular from blocked polyethylene imine, blocked polyvinyl amine, blocked polyallyl amine and/or mixtures or combinations hereof, as well as
c) at least one solvent for poly(meth)acrylonitrile or a copolymer based on (meth)acrylonitrile, in which the previously mentioned components are present in dissolved state
is casted as a film or spun to form a hollow filament, the poly(meth)-acrylonitrile, copolymer based on (meth)acrylonitrile or mixture hereof is precipitated by a phase-inversion process and the poly(meth)acrylonitrile, copolymer based on (meth)acrylonitrile or mixture hereof is crosslinked by temperature treatment at temperatures increased relative to room temperature.

9. Method according to claim 8, **characterised in that** the film is casted onto a nonwoven made of polyester.

10. Method according to claim 8 or 9, **characterised in that**, after the phase-inversion process, the obtained film or hollow filament, respectively, is washed with water.

11. Method according to one of the preceding claims, **characterised in that**
a) the temperature treatment is effected at temperatures of 50 to 150°C, preferably of 70 to 120°C, particularly preferably of 85 to 99°C, in particular during a washing step subsequent to the phase-inversion process with water and/or over a period of time of 5 min to 24 hours, preferably 15 min to 12 hours, particularly preferably of 30 min to 5 hours and/or
b) after crosslinking and/or washing, drying of the membrane is implemented, preferably in an air flow at a temperature between 60 and 120°C.

12. Polymer membrane, producible according to a method according to one of the claims 8 to 12, **characterised by** a continuously configured crosslinking of the poly(meth)acrylonitrile or of the copolymer based on (meth)acrylonitrile.

13. Polymer membrane according to the preceding claim, in the form of a flat membrane or hollow thread membrane.

14. Polymer membrane according to the preceding claim, **characterised in that**
a) the thickness of the membrane without any possibly present substrate is of 20 to 200 µm, preferably of 40 to 90 µm and/or
b) the pore size of the membrane at the bubble point is of 20 to 100 nm, preferably 30 to 50 nm.
c) an average pore size of 15 to 30 nm, preferably of 18 to 25 nm and/or
d) by a nitrogen permeability J_{N2} of 10 to 1,000 m³/(m²*h*bar).

15. Polymer membrane according to one of the claims 12 to 14, **characterised in that** it has a foam structure.

## Revendications

1. Solution destinée à la préparation d'une membrane polymère contenant ou constituée de
a) un copolymère à base de (méth)acrylonitrile obtenu par copolymérisation de (méth)acrylonitrile avec au moins un copolymère choisi dans le groupe constitué par l'acide (méth)allylsulfonique ou ses sels ou des mélanges de ceux-ci,
b) au moins un agent réticulant pour poly(méth)acrylonitrile ou un copolymère à base de (méth)acrylonitrile, dans lequel l'agent réticulant
- est un polymère contenant un groupe amine choisi dans le groupe constitué par la polyéthylèneimine (PEI), la polyvinylamine, la polyallylamine et/ou des mélanges de celles-ci et/ou
- est libéré in situ à partir de polyéthylèneimine bloquée, de polyvinylamine bloquée, de polyallylamine bloquée et/ou de mélanges de celles-ci,
et
c) au moins un solvant pour poly(méth)acrylonitrile ou un copolymère à base de (méth)acrylonitrile, dans lequel les composants précités se trouvent dissous.

2. Solution selon la revendication précédente, **caractérisée en ce que** le solvant est choisi dans le groupe constitué par le diméthylsulfoxyde (DMSO), le diméthylformamide (DMF), la N-méthylpyrrolidone (NMP), le diméthylacétamide (DMAC), le tétrahydrothiophène-1,1-dioxyde (sulfolane), des solutions aqueuses de thiocyanate de sodium et/ou de chlorure de zinc, ainsi que des mélanges de ceux-ci.

3. Solution selon l'une des deux revendications précédentes, **caractérisée en ce que**
a) la polyéthylèneimine (PEI), la polyvinylamine ou la polyallylamine possède une masse moléculaire moyenne en nombre M_{w} de 25 000 à 750 000 g/mol et/ou
b) la polyéthylèneimine (PEI) bloquée, la polyvinylamine bloquée ou la polyallylamine bloquée possède de préférence une masse moléculaire moyenne en nombre M_{w} de 25 000 à 750 000 g/mol.

4. Solution selon la revendication précédente, **caractérisée en ce que** la polyéthylèneimine bloquée est une cétimine de polyéthylèneimine, la polyvinylamine bloquée est une cétimine de polyvinylamine et la polyallylamine bloquée est une cétimine de polyallylamine, dans laquelle le groupe céto est de préférence dérivé de cétones aliphatiques, en particulier de la méthylisobutylcétone.

5. Solution selon l'une des revendications 1 à 4, **caractérisée en ce qu'**elle contient un non-solvant dans lequel le poly(méth)acrylonitrile ou le copolymère à base de (méth)acrylonitrile ne se dissout pas et qui est miscible avec le solvant, dans laquelle le non-solvant est de préférence choisi dans le groupe constitué par le 1,3-dioxolane, le polyalkylèneglycol, en particulier le polyéthylèneglycol, le tétraalkylèneglycol, en particulier le tétraéthylèneglycol, les alcools, en particulier l'isopropanol, l'éthanol, les lactates d'alkyle, en particulier le lactate d'éthyle, ainsi que des mélanges de ceux-ci.

6. Solution selon l'une des revendications 1 à 5, **caractérisée en ce que**
a) la teneur totale en poly(méth)acrylonitrile, en copolymère à base de (méth)acrylonitrile ou en mélanges de ceux-ci rapportée au solvant et, le cas échéant, au total du solvant et du non-solvant, est de 1 à 30 % en poids, de préférence de 5 à 20 % en poids, tout particulièrement de 7,5 à 15 % en poids, et/ou
b) la teneur totale en agent réticulant rapportée au poly(méth)acrylonitrile, au copolymère à base de (méth)acrylonitrile ou aux mélanges de ceux-ci, est de 1 à 50 % en poids, de préférence de 3 à 20 % en poids, tout particulièrement de 7,5 à 12,5 % en poids, et/ou
c) la teneur en non-solvant rapportée à la teneur en solvant ou en mélange d'au moins deux solvants est de 50 à 60 % en poids, de préférence de 15 à 45 % en poids.

7. Solution selon l'une des revendications 1 à 6, **caractérisée par** une viscosité de 1,5 à 20 Pa·s, de préférence de 2 à 10 Pa·s.

8. Procédé de préparation d'une membrane polymère stable aux solvants, dans lequel une solution, contenant ou constituée de
a) poly(méth)acrylonitrile, un copolymère à base de (méth)acrylonitrile, obtenu par copolymérisation de (méth)acrylonitrile avec au moins un copolymère choisi dans le groupe constitué par l'acide (méth)allylsulfonique ou ses sels ou des mélanges de ceux-ci,
b) au moins un agent réticulant pour poly(méth)acrylonitrile ou un copolymère à base de (méth)acrylonitrile, dans lequel l'agent réticulant
- est un polymère contenant un groupe aminé choisi dans le groupe constitué par la polyéthylèneimine (PEI), la polyvinylamine, la polyallylamine et/ou des mélanges de celles-ci et/ou
- est libéré in situ à partir de polyéthylèneimine bloquée, de polyvinylamine bloquée, de polyallylamine bloquée et/ou de mélanges de celles-ci,
et
c) au moins un solvant pour poly(méth)acrylonitrile ou un copolymère à base de (méth)acrylonitrile, dans lequel les composants précités se trouvent dissous,
est coulée sous forme de film ou filée sous forme de fil creux, le poly(méth)acrylonitrile, le copolymère à base de (méth)acrylonitrile ou un mélange de ceux-ci est précipité par un procédé d'inversion de phase, et le poly(méth)acrylonitrile, le copolymère à base de (méth)acrylonitrile ou un mélange de ceux-ci est réticulé par traitement thermique à des températures supérieures à la température ambiante, dans lequel le film est coulé sur un non-tissé en matériau polymère.

9. Procédé selon la revendication 8, **caractérisé en ce que** le film est coulé sur un non-tissé en polyester.

10. Procédé selon l'une des revendications 8 et 9, **caractérisé en ce qu'**après le processus d'inversion de phase, le film ou le fil creux obtenu est lavé à l'eau.

11. Procédé selon l'une des revendications 8 à 10, **caractérisé en ce que**
a) le traitement thermique est réalisé à des températures de 50 à 150 °C, de préférence de 70 à 120 °C, tout particulièrement de 85 à 99 °C, notamment pendant une étape de lavage à l'eau suivant le processus d'inversion de phase et/ou sur une période de 5 minutes à 24 heures, de préférence de 15 minutes à 12 heures, tout particulièrement de 30 minutes à 5 heures et/ou,
b) après la réticulation et/ou le lavage, une opération de séchage de la membrane est réalisée, de préférence dans un courant d'air à une température comprise entre 60 et 120 °C.

12. Membrane polymère préparée suivant un procédé selon l'une des revendications 8 à 11, **caractérisée par** une réticulation continue du poly(méth)acrylonitrile ou du copolymère à base de (méth)acrylonitrile.

13. Membrane polymère selon la revendication précédente, sous la forme d'une membrane plate ou d'une membrane de fil creux.

14. Membrane polymère selon la revendication précédente, **caractérisée en ce que**
a) l'épaisseur de la membrane hors substrat éventuel est de 20 à 200 µm, de préférence de 40 à 90 µm et/ou
b) la taille des pores de la membrane au point de bulle est de 20 à 100 nm, de préférence de 30 à 50 nm et/ou
c) une taille moyenne des pores est de 15 à 30 nm, de préférence de 18 à 25 nm et/ou
d) une perméabilité à l'azote J_{N2} est de 10 à 1000 m³/(m²·h·bar).

15. Membrane polymère selon l'une des revendications 12 à 14, **caractérisée en ce qu'**elle présente une structure de mousse.
